# EUROPEAN PATENT APPLICATION

(11) **EP 2 237 520 A1**
(43) Date of publication of application: **06.10.2010**
(21) Application number: 09397509.2
(22) Date of filing: 31.03.2009
(51) Int. Cl.: H04L 29/06, H04L 12/66

(54) **Roaming and interworking arrangement**

(71) Applicant: Teliasonera AB, 106 63 Stockholm (SE)
(72) Inventor: Korhonen, Jouni, 11100, Riihimäki (FI); Jalkanen, Tero, 04340, TUUSULA (FI)
(74) Representative: Pursiainen, Timo Pekka

(57) **Abstract**

A system for connecting a plurality of operator networks with each other, the system comprising an inter-service-provider-IP-backbone network including a plurality of network nodes operating as peer-to-peer gateway nodes, each operator network providing at least one peer-to-peer gateway node. The peer-to-peer gateway nodes are arranged to operate as nodes in a distributed hash table system, the operation of the distributed hash table system being distributed among the nodes. Then address information of a node connected to a operator network is arranged to be resolved in the distributed hash table system, the address information being defined at least partly by address information of the peer-to-peer gateway node of the particular operator network; and the connections between the operator networks are arranged to be performed as direct connections between the peer-to-peer gateway nodes of the operator networks.

## Description

### Field of the invention

The present invention relates to inter-service-provider networks, and more particularly to a new roaming and interworking arrangement between operator networks.

### Background of the invention

The term "inter-service-provider-IP-backbone" refers to a network that enables interworking between 2G and 3G networks such as the GPRS (General Packet Radio Service) and UMTS (Universal Mobile Telecommunications System) networks. An example of the inter-service-provider-IP-backbone is GRX (GPRS Roaming eXchange) network, which is provided for GPRS roaming. The GRX is a private IP backbone, and it is arranged to transport GPRS roaming traffic between a visited and a home PMN (Public Mobile Network). At a minimum, a GRX Service Provider consists of a set of routers that are made up of the links connecting to the GPRS networks and the links connecting to other GRX nodes. In addition to the GPRS roaming, the GRX is also used for e.g. 3G roaming, WLAN roaming and MMS interworking.

The GRX implements a secure network, which is differentiated and closed from the Internet or other irrelevant network parties, and therefore there is no need to build separate tunnels between the 2G and 3G operators, whose number in the GRX is currently approximately several hundreds. With the development of IMS and SIP-related services there has been recognised the need to involve organisations outside the GSM/UMTS community, and thereby the GRX network is currently evolving into the IPX (IP eXchange) concept, which is the next generation of GRX services. Non-GSM/UMTS organisations may connect to the IPX for the purpose of IMS/SIP interworking and other similar services.

The GRX/IPX uses addressing that is similar to that used in the Internet. However, the addressing is completely separated from the Internet. The GRX/IPX also has a DNS hierarchy that is also completely separated from the Internet, and that is aimed only for a use of nodes and roaming connections between operators. The GRX/IPX management is based on a centralized structure, wherein depending on the operator network, the operator network may be constructed as a proxy network with static configuration and the AAA routing addressing may be based on either static addresses or centralized DNS.

However, this arrangement has serious disadvantages, because the rigid network structure requires that any change in the interconnection network environment must be communicated to and updated in each of the operator networks belonging to the GRX/IPX. Thus, when an operator network changes its network structure, e.g. changes an IP address of a network element, introduces a new element in the network or removes an old network element, all other GRX/IPX operator networks must update their internal configuration to reflect this change.

As can be easily concluded, this causes a lot of configuration updates to be performed, which many times are carried out manually, whereby a change visible in the GRX interface of the changed operator network is updated to the DNS hierarchy of the other GRX/IPX operator networks only with a delay of several hours. This jeopardises the functioning of roaming connections, at least temporarily. As is further evident, updating of the IP addresses is very laborious requiring a lot of static configurations to be changed. Considering the plans to evolve the GRX network of several hundred operators into the IPX network of several thousand or even more operators, the contemporary rigid network structure may become a serious burden for these plans.

### Summary of the invention

Now there has been invented an improved system and method, by which the above-stated problems are largely avoided. Various aspects of the invention include a system and a method, which are characterized by what is stated in the independent claims. Various embodiments of the invention are disclosed in the dependent claims.

According to a first aspect, a system according to the invention is based on the idea of connecting a plurality of operator networks with each other in a system, which comprises an inter-service-provider-IP-backbone network arranged to provide interconnection and roaming services for operator networks, and the inter-service-provider-IP-backbone network comprises a plurality of network nodes operating as peer-to-peer gateway nodes, each operator network providing at least one peer-to-peer gateway node; said peer-to-peer gateway nodes are arranged to operate as nodes in a distributed hash table system, the operation of said distributed hash table system being distributed among the plurality of peer-to-peer gateway nodes participating in the inter-service-provider-IP-backbone network; wherein address information of a node connected to one of said operator networks is arranged to be resolved in said distributed hash table system, the address information being defined at least partly by address information of the peer-to-peer gateway node of the particular operator network; and the connections between the operator networks are arranged to be performed as direct connections between the peer-to-peer gateway nodes of the operator networks.

According to an embodiment, the system further comprises a common bootstrapping node in the inter-service-provider-IP-backbone network, the bootstrapping node providing initial configuration information and access to other peer-to-peer gateway nodes of the inter-service-provider-IP-backbone network.

According to an embodiment, at least part of the interconnection and roaming services of a first operator network are assigned to a peer-to-peer node of another operator network or to the common bootstrapping node of the inter-service-provider-IP-backbone network.

According to an embodiment, the direct connections between the peer-to-peer gateway nodes of the operator networks are arranged to be established according to an application-specific protocol.

According to an embodiment, joining and participating in the inter-service-provider-IP-backbone network is secured with a certificate authorised by the inter-service-provider-IP-backbone network.

According to a second aspect, a method according to the invention is based on the idea of providing a plurality of network nodes in the inter-service-provider-IP-backbone network to operate as peer-to-peer gateway nodes, each operator network providing at least one peer-to-peer gateway node; arranging said peer-to-peer gateway nodes to operate as nodes in a distributed hash table system, the operation of said distributed hash table system being distributed among the plurality of peer-to-peer gateway nodes participating in the inter-service-provider-IP-backbone network; resolving address information of a node connected to one of said operator networks in said distributed hash table system, the address information being defined at least partly by address information of the peer-to-peer gateway node of the particular operator network; and establishing the connections between the operator networks as direct connections between the peer-to-peer gateway nodes of the operator networks.

According to an embodiment, the method further comprises: announcing, by an operator network, the address information of at least one server providing interconnection and roaming services within said operator network in the inter-service-provider-IP-backbone network; hashing the address information of said at least one server in the peer-to-peer gateway node of the particular operator network to produce a hashed key; and sending the key and the address information of said peer-to-peer gateway node to the distributed hash table system to be stored in a peer-to-peer gateway node responsible for said key.

According to an embodiment, the method further comprises: retrieving, from a second operator network, the address information of the peer-to-peer gateway node, through which said at least one server can be accessed by hashing the address information of said at least one server in the peer-to-peer gateway node of the second operator network to produce a hashed key; sending the key to the peer-to-peer gateway node responsible for said key; and receiving the address information of the peer-to-peer gateway node, through which said at least one server can be accessed, from said peer-to-peer gateway node responsible for said key.

The arrangement according to the invention provides significant advantages. The peer-to-peer based roaming and interconnection network with the distributed hash table system provides a dynamic interface for joining and participating the system, and enables the interconnection and roaming network to be scaled to very large numbers of nodes with only a minimal increase in the complexity of the system; no internal changes are required in the network structure of operator network. The easiness of joining the interconnection and roaming network makes the arrangement even more attractive for possible new operator networks. Moreover, the system expedites the interconnection and roaming-related configuration updates to be implemented, since no manual updates are required anymore; at the same time, the risk of human errors naturally diminishes. Also the simplification of the system through the fact that neither a centralized DNS nor a centralized address database, like the contemporary IR.21, is needed anymore accelerates the implementation of the configuration updates.

These and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: shows a basic network structure according to an embodiment of the invention;
- Fig. 2: shows a layer model of the DHT-based p2p network according to an embodiment of the invention; and
- Fig. 3: shows a flow chart of a method for finding an opposite peer according to an embodiment of the invention.

### Description of embodiments

In the following, the invention will be illustrated by referring to IPX network architecture It is, however, noted that the invention is not limited to IPX solely, but it can be implemented in any interconnection and roaming network.

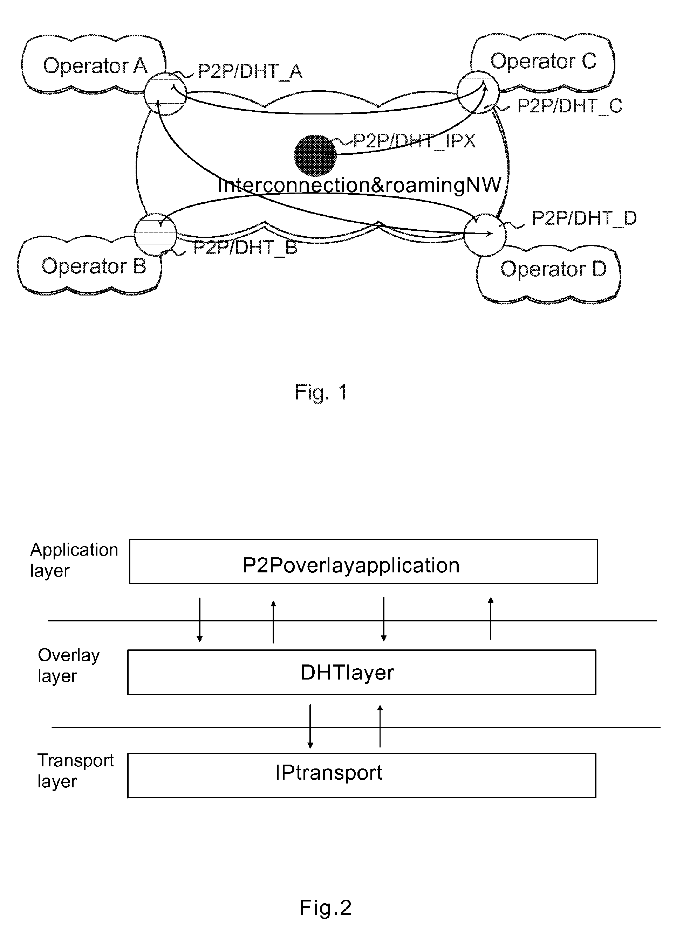

Fig. 1 illustrates the basic network structure underlying the embodiments. The interconnection and roaming network consists of a group of nodes from a plurality of IPX network operators. Each of the IPX network operators (A, B, C, D) maintains its own peer-to-peer (p2p) network, and each IPX network operator offers at least one p2p node (P2P/DHT_A - P2P/DHT_D), i.e. a so-called edge node, from its own p2p network to the interconnection and roaming network. This edge node is responsible for keeping track on the configuration information and necessary address data of its own operator network access, e.g. the address data of the AAA servers or ENUM servers. For managing and storing the data, the p2p node may delegate at least part of the tasks to other nodes of the p2p network, as explained below.

The interconnection and roaming network preferably further comprises a common bootstrapping node (P2P/DHT_IPX) providing any newly joining edge nodes (either an additional edge node of a known IPX network operator or an edge node of a new IPX network operator) with sufficient configuration information so that the new edge node may then successfully join the p2p network and access resources. The configuration information may comprise e.g. discovery protocol information for discovering peers on the network, membership protocol information for joining the peer groups on the network, overlay network dependent instructions, and control information for trust management, such as encryption/signature protocols or admission policies.

Accordingly, the contact information of the one or more edge nodes is made available for the other IPX network operators. The availability of the contact information is implemented by using a system based on distributed hash tables (DHTs). DHTs are decentralized distributed lookup tables comprising key-value-pairs stored in the DHT, and enabling any participating node to retrieve the value associated with a given key. The key typically is a hashed filename or variable name, and the key value controls, which node is assigned to store the value.

Fig. 2 illustrates a layer model of the DHT-based p2p network. The underneath transport layer is typically a basic IP transport network provided by the IPX operator. The overlay/DHT layer above the transport layer provides the services of the DHT system. In the DHT layer, the responsibility for storing, searching and maintaining the data and mapping the names to values according to the key-value-pairs is distributed among the nodes. Furthermore, the DHT layer can autonomously handle arrivals of new edge nodes and departures of old nodes of the interconnection and roaming network. The DHT is based on an abstract keyspace, and a keyspace partitioning scheme is used for sharing ownership of the keyspace among the participating nodes. A major advantage of the DHT is that it can be scaled to very large numbers of nodes with only a minimal increase in the complexity of the system.

The selection of the actual DHT system is irrelevant in regard to the implementation of the invention. Most DHTs are based on consistent hashing for mapping keys to nodes, wherein a keyspace distance (i.e. not a geographical or transmission delay-based distance) between two keys is defined. In DHT hashing, the most commonly used hash functions are based on some version of the SHA (Secure Hashing Algorithm). The existing three SHA algorithms, SHA-0, SHA-1, and SHA-2, are structured differently, SHA-1 being the best established and most widely used in different security applications.

Each node is assigned a single key, and thereafter for any key k, the node either owns k or has a link to a node that is closer to k in terms of the keyspace distance. When routing the message between nodes in order to find the correct node, if no other node being closer to k is found, then the present node is the owner of the key k.

All DHTs use this basic principle in determining the correct node, and even though many designs differ in the details, for example any of the following commonly known DHTs may be used in the present implementation: Chord, Kamdelia, CAN (Content Addressable Network), Pastry, Tapestry, P-Grid.

The application/p2p overlay application layer on top of the DHT layer then operates as the actual p2p system connecting the edge nodes and provides the services, which are characteristic to the traditional GRX network, i.e. AAA routing (discovering correct AAA servers), SIP routing, providing SIP proxies, roaming proxies, IM proxies, MMS hubs, ENUM services, converting DNS numbers into IP addresses, etc. Each node of the application/p2p overlay application layer maintains a set of links to its neighbouring nodes, wherein the neighbours are determined according to the network's topology. Since the DHT can be used to route messages to a node having specific logical address, whose IP address is not known in advance, the p2p system is primarily aimed for finding the opposite peer, not for transferring the actual control data.

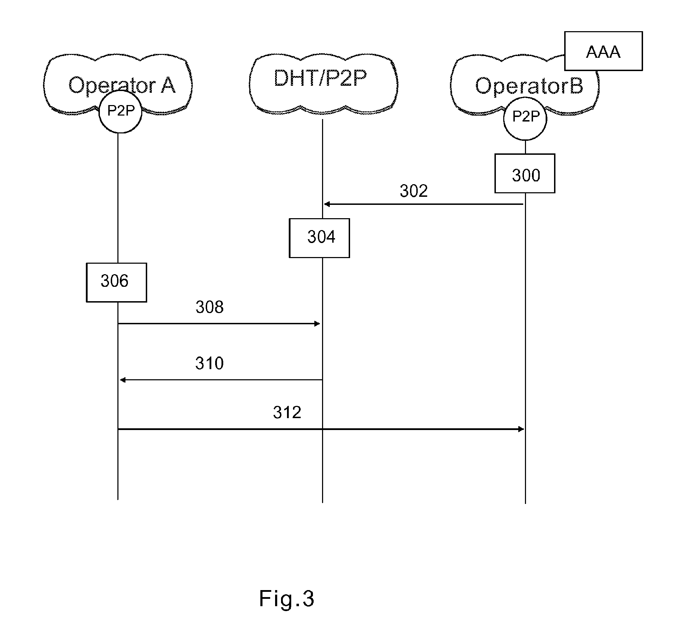

Fig. 3 illustrates an example of finding the opposite peer. As a starting point, let us suppose that the operator B, belonging to the roaming and interconnection p2p network, announces its AAA server to the p2p network. To store in the DHT the IP address of the edge node, through which AAA server with given file/address name and address data can be contacted, the edge node of operator B creates (300) a hash of the file/address name (aaa.operator.b.com), resulting in a key k. Then the edge node of operator B sends (302) a message put(k, address data) to any node participating in the DHT. The receiving node possibly forwards (not shown in Fig. 3) the message to a further node, and if necessary, via a plurality of further nodes through the overlay network until the responsible node for key k is found. Finally, the responsible node stores (304) the pair (k, address data).

Then the operator A, also belonging to the roaming and interconnection p2p network, needs to find the AAA server of the operator b for a roaming user user@aaa.operator.b.com. For retrieving the address data of the of the edge node, through which the AAA server can be contacted, the edge node of the operator A hashes (306) the file/address name (aaa.operator.b.com) to produce k and sends (308) a message get(k) in order to find the data associated with k. The message will again be routed (not shown in Fig. 3) in the similar manner through the nodes of the overlay to the node responsible for k. The node responsible for k then retrieves the address data of the edge node, through which the AAA server can be contacted and sends (310) a reply with the stored data to the edge node of the operator A. Instead of an edge node of the operator B, the contact address may also refer to a p2p-capable proxy of a delegated IPX operator. Nevertheless, in response to obtaining the address data of the contact node, the edge node of the operator A contacts (312) directly the contact node, e.g. the edge node of the operator B, by applying an application-specific protocol. In case of contacting an AAA server, the application-specific protocol is naturally some AAA protocol.

However, the embodiments disclosed herein emphasize the fact that it is only relevant to find the correct contact points (e.g. edge nodes), meaning that only the edge nodes of each operator participating in the roaming and interconnection p2p network need to implement the necessary p2p/DHT functions. Within their own networks, each operator may implement their network topology, DNS/ENUM services, AAA services, etc. as best suited for their purposes. Thus, no changes are required in the internal network structure of potential new operators for joining the above-described roaming and interconnection network.

According to an embodiment, joining and participating in the roaming and interconnection network is secured with a certificate authorised by the roaming and interconnection p2p network. One of the peer-to-peer nodes, for example the common bootstrapping node, may operate as the certificate authority. A new operator network, intending to join the roaming and interconnection network, sends a certificate signing request, possibly accompanied by other credentials required by the certificate authority. The certificate authority then acknowledges a successful request by sending back an identity signed with the private key of the certificate authority.

A skilled man appreciates that any of the embodiments described above may be implemented as a combination with one or more of the other embodiments, unless there is explicitly or implicitly stated that certain embodiments are only alternatives to each other.

The functionalities of the invention may be implemented in an apparatus, such as a network node, also as a computer program which, when executed in a central processing unit CPU or in a dedicated digital signal processor DSP, affects the network node to implement procedures of the invention. Functions of the computer program SW may be distributed to several separate program components communicating with one another. The computer software may be stored into any memory means, such as the hard disk of a PC or a CD-ROM disc, from where it can be loaded into the memory of network node. The computer software can also be loaded through a network, for instance using a TCP/IP protocol stack.

It is also possible to use hardware solutions or a combination of hardware and software solutions to implement the inventive means. Accordingly, the above computer program product can be at least partly implemented as a hardware solution, for example as ASIC or FPGA circuits, or as one or more integrated circuits IC, the hardware module or the ICs further including various means for performing said program code tasks, said means being implemented as hardware and/or software.

It is obvious that the present invention is not limited solely to the above-presented embodiments, but it can be modified within the scope of the appended claims.

## Claims

1. A system for connecting a plurality of operator networks with each other, the system comprising
an inter-service-provider-IP-backbone network arranged to provide interconnection and roaming services for operator networks,
**characterized in that**
the inter-service-provider-IP-backbone network comprises a plurality of network nodes operating as peer-to-peer gateway nodes, each operator network providing at least one peer-to-peer gateway node;
said peer-to-peer gateway nodes are arranged to operate as nodes in a distributed hash table system, the operation of said distributed hash table system being distributed among the plurality of peer-to-peer gateway nodes participating in the inter-service-provider-IP-backbone network;
wherein address information of a node connected to one of said operator networks is arranged to be resolved in said distributed hash table system, the address information being defined at least partly by address information of the peer-to-peer gateway node of the particular operator network; and
the connections between the operator networks are arranged to be performed as direct connections between the peer-to-peer gateway nodes of the operator networks.

2. The system according to claim 1, **characterized in that** the system further comprises
a common bootstrapping node in the inter-service-provider-IP-backbone network, the bootstrapping node providing initial configuration information and access to other peer-to-peer gateway nodes of the inter-service-provider-IP-backbone network.

3. The system according to claim 1or 2, **characterized in that**
at least part of the interconnection and roaming services of a first operator network are assigned to a peer-to-peer node of another operator network or to the common bootstrapping node of the inter-service-provider-IP-backbone network.

4. The system according to any preceding claim, **characterized in that** the direct connections between the peer-to-peer gateway nodes of the operator networks are arranged to be established according to an application-specific protocol.

5. The system according to any preceding claim,
**characterized in that**
joining and participating in the inter-service-provider-IP-backbone network is secured with a certificate authorised by the inter-service-provider-IP-backbone network.

6. A method for connecting a plurality of operator networks with each other in an inter-service-provider-IP-backbone network arranged to provide interconnection and roaming services for the operator networks, **characterized by** the method comprising
providing a plurality of network nodes in the inter-service-provider-IP-backbone network to operate as peer-to-peer gateway nodes, each operator network providing at least one peer-to-peer gateway node;
arranging said peer-to-peer gateway nodes to operate as nodes in a distributed hash table system, the operation of said distributed hash table system being distributed among the plurality of peer-to-peer gateway nodes participating in the inter-service-provider-IP-backbone network;
resolving address information of a node connected to one of said operator networks in said distributed hash table system, the address information being defined at least partly by address information of the peer-to-peer gateway node of the particular operator network; and
establishing the connections between the operator networks as direct connections between the peer-to-peer gateway nodes of the operator networks.

7. The method according to claim 6, **characterized by** the method further comprising:
announcing, by an operator network, the address information of at least one server providing interconnection and roaming services within said operator network in the inter-service-provider-IP-backbone network;
hashing the address information of said at least one server in the peer-to-peer gateway node of the particular operator network to produce a hashed key; and
sending the key and the address information of said peer-to-peer gateway node to the distributed hash table system to be stored in a peer-to-peer gateway node responsible for said key.

8. The method according to claim 7, **characterized by** the method further comprising:
retrieving, from a second operator network, the address information of the peer-to-peer gateway node, through which said at least one server can be accessed by
hashing the address information of said at least one server in the peer-to-peer gateway node of the second operator network to produce a hashed key;
sending the key to the peer-to-peer gateway node responsible for said key; and
receiving the address information of the peer-to-peer gateway node, through which said at least one server can be accessed, from said peer-to-peer gateway node responsible for said key.

9. The method according to any of the claims 6 - 8, **characterized by** the method further comprising:
establishing the direct connections between the peer-to-peer gateway nodes of the operator networks according to an application-specific protocol.
